# EUROPEAN PATENT APPLICATION

(11) **EP 4 443 272 A1**
(43) Date of publication of application: **09.10.2024**
(21) Application number: 24162591.2
(22) Date of filing: 11.03.2024
(51) Int. Cl.: G06F 3/01, G06F 3/023

(54) **FREEHAND TYPING FOR AUGMENTED REALITY**

(30) Priority: 05.04.2023 US 202318296173
(71) Applicant: Meta Platforms Technologies, LLC, Menlo Park, CA 94025 (US)
(72) Inventor: Karlson, Amy, Menlo Park (US); Surale, Hemant, Menlo Park (US); Collins, Christopher, Menlo Park (US); Kim, Taejun, Menlo Park (US); Gupta, Aakar, Menlo Park (US); Glueck, Michael, Menlo Park (US)
(74) Representative: Murgitroyd & Company

(57) **Abstract**

Various aspects of the subject technology relate to systems, methods, and machine-readable media for freehand typing in AR/VR applications. Various aspects may include receiving data from one or more sensors at a client device. Aspects may also include tracking hand position of a user of the client device based on the data. Aspects may also include identifying a performance of a preset posture by the user. Aspects may also include determining a position of a virtual keyboard based on the hand position, wherein the position is determined based on the preset posture being performed and displaying the virtual keyboard at the position. The position may be optimized such that the display of the virtual keyboard enables haptic feedback when the user performs input selections via the virtual keyboard (using at least one hand). The virtual keyboard may be displayed in a general view of the user.

## Description

### BACKGROUND

### Field

The present disclosure is generally related to user input in virtual/augmented reality that leverages smartphone keyboard typing motor skills. More specifically, the present disclosure includes on-skin thumb typing/swiping which mimics smartphone typing/swiping without requiring a handheld device.

### Related Art

Text entry using handheld controllers are widely adopted in virtual reality and augmented reality (VR/AR) applications. Current VR/AR applications also incorporate the use of virtual keyboards suspended in mid-air, eye tracking, or finger tapping to receive input text or interpret user inputs within an immersive or virtual reality (VR) environment. However, these text input methods require the users' hand to be occupied (i.e., handheld devices) which limits user capabilities while experiencing a VR/AR application, are mostly unfamiliar to users as they are different from the way people type in today's life, and may be overall inefficient for the user. As such, there is a need for an efficient and adaptable text input method that may be implemented in VR/AR systems.

### SUMMARY

According to an aspect, there is provided a computer-implemented method, performed by at least one processor, for freehand typing, the method comprising:
receiving data from one or more sensors at a client device;
tracking hand position of a user of the client device based on the data;
identifying a performance of a preset posture, the preset posture being performed by the user of the client device;
determining a position of a virtual keyboard based on the hand position, wherein the position is determined based on the preset posture being performed; and
displaying the virtual keyboard at the position,
wherein the virtual keyboard is displayed in a general view of the user, the user performs input selections via the virtual keyboard using at least one hand, and the displaying of the virtual keyboard is terminated in response to the preset operation being released.

The tracking hand position may further comprise tracking hand movement and thumb joints.

The preset posture may be at least one of:
a knuckle posture performed by one or two hands with an outer surface of an index finger and one or two thumbs facing an upward direction, and when the knuckle posture is performed by two hands, at least one joint of a same finger in each hand is brought together, and
an open palm posture performed by one or two hands with a flat of the one or two hands and one or two thumbs facing an upward direction.

The position of the virtual keyboard may be defined by a set of parameters, the set of parameters including layout, size, height, distance between keys of the virtual keyboard, and orientation, and the set of parameters are adjusted based on at least the data associated with the user.

The method may further comprise:
determining a leveled keyboard surface;
mapping the virtual keyboard to the leveled keyboard surface; and
displaying the virtual keyboard at the leveled keyboard surface,
wherein the leveled keyboard surface is one of a peripheral index finger surface of the user or a nested finger surface of the user.

The virtual keyboard may be leveled with the hand position and displayed to appear within a predetermined distance from a hand of the user.

The method may further comprise:
determining the input selections of virtual keys on the virtual keyboard based on the tracking of the hand position and the position of the virtual keyboard,
wherein the input selections are performed via at least one of virtual key selections in a typing operation and virtual key selections in a swiping operation.

The position of the virtual keyboard may be determined such that the input selections via the virtual keyboard enable haptic feedback.

The method may further comprise:
displaying a visualization of three thumb joints that correspond to hand movements of the user; and
displaying a projection arc linking at least one of the three thumb joints,
wherein the at least one of the three thumb joints and the projection arc hover over the virtual keyboard.

The method may further comprise:
determining that the user is in motion; and
locking the virtual keyboard at the position in response to a determination that the user is in motion.

According to another aspect, there is provided a system for freehand typing, the system comprising:
one or more processors; and
a memory storing instructions which, when executed by the one or more processors, cause the system to:
   receive data from one or more sensors at a client device;
   track hand position of a user of the client device based on the data;
   identify a performance of a preset posture, the preset posture being performed using at least one hand of the user of the client device;
   determine a position of a virtual keyboard based on the hand position, wherein the position is determined based on the preset posture being performed; and
   display the virtual keyboard at the position within a general view of the user,
wherein the user performs input selections via the virtual keyboard using at the least one hand, the display of the virtual keyboard is terminated in response to the preset operation being released, and the position of the virtual keyboard is determined such that the input selections via the virtual keyboard enable haptic feedback.

The one or more processors may further execute instructions to track hand movement and thumb joints.

The preset posture may be at least one of:
a knuckle posture performed by one or two hands with an outer surface of an index finger and one or two thumbs facing an upward direction, and when the knuckle posture is performed by two hands, at least one j oint of a same finger in each hand is brought together, and
an open palm posture performed by one or two hands with a flat of the one or two hands and one or two thumbs facing an upward direction.

The position of the virtual keyboard may be defined by a set of parameters, the set of parameters including layout, size, height, distance between keys of the virtual keyboard, and orientation, and the set of parameters are adjusted based on at least the data associated with the user.

The one or more processors may further execute instructions to:
determine a leveled keyboard surface;
map the virtual keyboard to the leveled keyboard surface; and
display the virtual keyboard at the leveled keyboard surface,
wherein the leveled keyboard surface is one of a peripheral index finger surface of the user or a nested finger surface of the user.

The virtual keyboard may be leveled with the hand position and displayed to appear within a predetermined distance from a hand of the user.

The one or more processors may further execute instructions to determine the input selections of virtual keys on the virtual keyboard based on the hand position and the position of the virtual keyboard, wherein the input selections are performed via at least one of virtual key selections in a typing operation and virtual key selections in a swiping operation.

The one or more processors may further execute instructions to:
display a visualization of three thumb joints that correspond to hand movements of the user; and
display a projection arc linking at least one of the three thumb joints,
wherein the at least one of the three thumb joints and the projection arc hover over the virtual keyboard.

The one or more processors may further execute instructions to:
determine that the user is in motion; and
lock the virtual keyboard at the position in response to a determination that the user is in motion.

According to a further aspect, there is provided a non-transient computer-readable storage medium having instructions embodied thereon, the instructions being executable by one or more processors to perform a method for freehand typing and cause the one or more processors to:
receive sensory data from one or more sensors at a client device, the client device being at least part of an AR application and worn by a user;
analyze the sensory data based at least in part on thumb position, joint position, joint movement, and hand movement, and hand position tracking of the user;
determine when the user performs a preset posture or gesture using at least one hand;
determine a position of a virtual keyboard based on the analysis; and
display the virtual keyboard at the position,
wherein the display is maintained while the present posture is maintained, and the position of the virtual keyboard is determined such that the input selections via the virtual keyboard enable haptic feedback.

The subject disclosure provides for systems and methods for freehand typing. In one aspect of the present disclosure, the method includes receiving data from one or more sensors at a client device, tracking hand position of a user of the client device based on the data, identifying a performance of a preset posture, the preset posture being performed by the user of the client device, determining a position of a virtual keyboard based on the hand position, wherein the position is determined based on the preset posture being performed, and displaying the virtual keyboard at the position, wherein the virtual keyboard is displayed in a general view of the user, the user performs input selections via the virtual keyboard using at least one hand, and the displaying of the virtual keyboard is terminated in response to the preset operation being released.

Another aspect of the present disclosure relates to a system configured for freehand typing. The system includes one or more processors, and a memory storing instructions which, when executed by the one or more processors, cause the system to perform operations. The operations include to receive data from one or more sensors at a client device, track hand position of a user of the client device based on the data, identify a performance of a preset posture, the preset posture being performed using at least one hand of the user of the client device, determine a position of a virtual keyboard based on the hand position, wherein the position is determined based on the preset posture being performed, and display the virtual keyboard at the position within a general view of the user, wherein the user performs input selections via the virtual keyboard using at the least one hand, the display of the virtual keyboard is terminated in response to the preset operation being released, and the position of the virtual keyboard is determined such that the input selections via the virtual keyboard enable haptic feedback.

Yet another aspect of the present disclosure relates to a non-transient computer-readable storage medium having instructions embodied thereon, the instructions being executable by one or more processors to perform a method(s) for freehand typing described herein. The method may include receiving sensory data from one or more sensors at a client device, the client device being at least part of an AR application and worn by a user, analyzing the sensory data based at least in part on thumb position, joint position, joint movement, and hand movement, and hand position tracking of the user, determining when the user performs a preset posture or gesture using at least one hand, determining a position of a virtual keyboard based on the analysis, and displaying the virtual keyboard at the position, wherein the display is maintained while the present posture is maintained, and the position of the virtual keyboard is determined such that the input selections via the virtual keyboard enable haptic feedback.

It will be appreciated that any features described herein as being suitable for incorporation into one or more aspects or embodiments of the present disclosure are intended to be generalizable across any and all aspects and embodiments of the present disclosure. Other aspects of the present disclosure can be understood by those skilled in the art in light of the description, the claims, and the drawings of the present disclosure. The foregoing general description and the following detailed description are exemplary and explanatory only and are not restrictive of the claims.

### BRIEF DESCRIPTION OF THE DRAWINGS

FIG. 1 illustrates a network architecture used to implement freehand typing, according to some embodiments.
FIG. 2 is a block diagram illustrating details of devices used in the architecture of FIG. 1, according to some embodiments.
FIGS. 3A-3B illustrate exemplary postures and/or gestures performed for activating virtual keyboard display, according to some embodiments.
FIG. 4 illustrates a workflow of a process for displaying a freehand virtual keyboard, according to some embodiments.
FIG. 5 illustrates a flowchart of a method for freehand typing, according to some embodiments.
FIG. 6 is an example illustration of a virtual keyboard displayed in an AR/VR system, according to some embodiments.
FIG. 7 is a block diagram illustrating a computer system used to at least partially carry out one or more of operations in methods disclosed herein, according to some embodiments.

In the figures, elements having the same or similar reference numerals are associated with the same or similar attributes, unless explicitly stated otherwise.

### DETAILED DESCRIPTION

In the following detailed description, numerous specific details are set forth to provide a full understanding of the present disclosure. It will be apparent, however, to one ordinarily skilled in the art, that the embodiments of the present disclosure may be practiced without some of these specific details. In other instances, well-known structures and techniques have not been shown in detail so as not to obscure the disclosure.

### General Overview

Text input methods in AR/VR systems include mid-air typing on virtual keyboards or using hand controllers. However, these methods are not efficient and require a higher learning curve for users to adjust and implement. Handheld controller typing for VR applications limits bare-handed AR activities and mobility as it requires users to keep the devices on hand. Therefore, currently adopted AR typing techniques are not easy to use, the unfamiliarity brings demanding user adaptation, and is not easily adaptable in other AR/VR applications. In addition, common bare-hand AR text entry techniques lack haptic feedback from a physical surface. For example, AR text entry requires users to touch a mid-air virtual keyboard using the index finger, with no haptic sensation on each key touch. This lack of surface haptic is known to impact input accuracy, typing speed, and user fatigue as mid-air gestures tend to require users to keep the hands raised up to eye level. Eye/head tracking may be used for text entry with eye/head movement (e.g., using head rotation for pointing and eye blink for selection). However, this method of typing is hard to learn and adjust to, much slower than the standard typing approach, and users may suffer from eyes and neck fatigue induced by unnatural use of eye and head movements. In addition, eye gaze typing can also impact natural viewing experience. Applicability of speech recognition for text entry significantly drops in noisy environments and inevitably raises privacy and security concerns. Smartphone typing (*i.e.,* texting) has become a standard means of day-to-day typing, specifically two-hand thumb typing. The smartphone typing skill, the coordinated movement of thumbs and eyes on a hand-sized keyboard, has been one of the most common skills for text input users. As such, the familiar thumb typing skill may be transferred to AR/VR systems as a text input method. This will increase the productivity of AR/VR applications in an efficient and user-friendly way.

Embodiments describe smartphone-analogous typing in AR systems (STAR) via bare-hand AR text entry using thumb tapping on a hand skin surface. Methods described herein leverage typing skills acquired from years of smartphone experiences. Users can perform familiar thumb typing as well as exploit haptic feedback from their hand surface. As such, enabling efficient text entry performance based at least on the fact that STAR does not require the user to learn entirely new motor articulation methods, thus results in increased typing speeds and reduced error rates (two key metrics describing performance in text entry). STAR method does not require the user to learn entirely new motor articulation methods. Additionally, the STAR method does not require holding a device such as a keyboard, controller, or the like to perform typing operation in ARIVR, allowing the user to switch from AR typing to another (virtual or real world) task comfortably and with ease.

According to some embodiments, STAR may be triggered by performing a gesture or the like *(e.g.,* making a knuckle posture as if holding a smartphone) to invoke a typing mode. In typing mode, a virtual keyboard layout appears overlaid on the hand skin surface of the user through a VR/AR device *(e.g.,* a headset, smart glasses, or the like). Once a text entry is complete, the user can escape the typing mode by releasing the gesture (e.g., the knuckle posture) and seamlessly transition into other tasks. The form of a knuckle posture is expected to support quick mode switching as well as prevent unintended activation. In addition, STAR typing can be socially acceptable as familiar smartphone-typing like gestures intuitively indicate users' state of typing. In some embodiments, STAR may be implemented for performing typing or swiping in-air, typing or swiping on the surface of the index finger, and using single-thumb or two-thumb typing/swiping operations.

Embodiments may reference AR and VR interchangeably and is not limited to one or the other. Methods and systems described herein may be implemented within AR, VR, MR applications or the like.

### Example Architecture

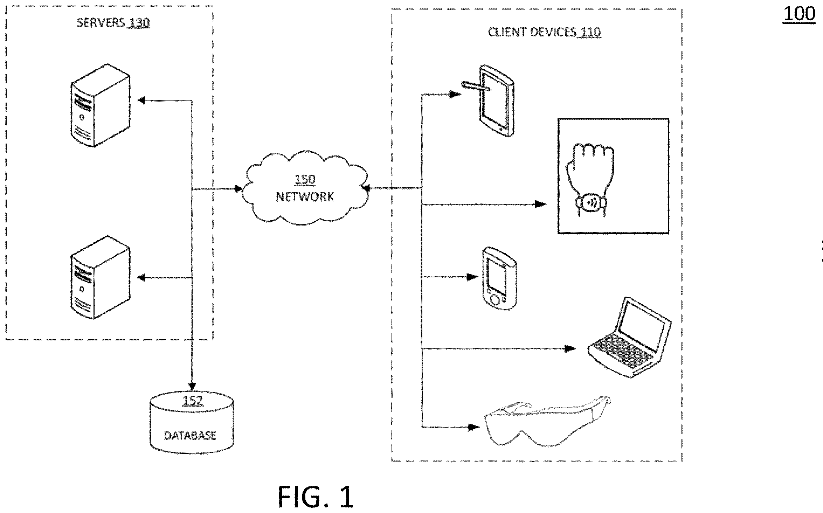

FIG. 1 illustrates a network architecture 100 used to implement typing for augmented reality (AR), according to some embodiments. Architecture 100 may include servers 130 and a database 152, communicatively coupled with multiple client devices 110 via a network 150. Client devices 110 may include any one of a laptop computer, a desktop computer, or a mobile device such as a smart phone, a palm/hand device, or a tablet device. The client device 110 may include one or more devices. In some embodiments, the client device 110 includes a wrist band (or other device worn on the wrist) coupled to another device such as a VR/AR headset (or other wearable device such as a virtual reality or augmented reality headset or smart glass), which may communicate with one another via wireless communications and exchange data. A user of the input device and the output device may be the same. The client device 110 is not limited to these examples and may include an HMD display, a finger-worn peripheral, etc.

Client devices 110 may be communicatively coupled to the server 130 and the database 152 over the network 150 to send and receive information, such as requests, responses, collected data, and commands to other devices on the network 150 in the form of datasets. Communications can be made via, for example, modems or Ethernet cards, and may include radio hardware and software for wireless communications (e.g., via electromagnetic radiation, such as radiofrequency -RF-, near field communications -NFC-, Wi-Fi, and Bluetooth radio technology).

Network 150 can include, for example, any one or more of a local area network (LAN), a wide area network (WAN), the Internet, and the like. Further, network 150 can include, but is not limited to, any one or more of the following network topologies, including a bus network, a star network, a ring network, a mesh network, a star-bus network, tree or hierarchical network, and the like.

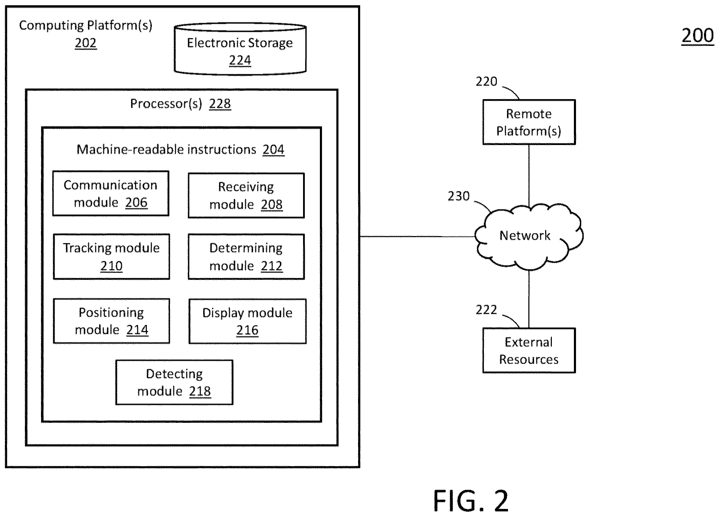

Client device 110 may also include one or more sensors and a processor, configured to execute instructions stored in a memory, and to cause client device 110 to perform at least some operations in methods consistent with the present disclosure. The memory may further include an application including one or more modules configured to perform operations according to some embodiments. Such modules are later described in detail with reference to at least FIG. 2.

FIG. 2 is an exemplary diagram illustrating a system 200 configured for smartphone-analogous typing for augmented reality, according to one or more embodiments. The system 200 may include one or more computing platform(s) 202. Computing platform(s) 202 may be configured to communicate with one or more remote platforms according to a client device/server architecture, a peer-to-peer architecture, and/or other architectures. Remote platform(s) may be configured to communicate with other remote platforms via computing platform(s) and/or according to a client/server architecture, a peer-to-peer architecture, and/or other architectures. Users may access the system via the computing platform(s) and/or remote platform(s).

Computing platform(s) 202 may be configured by machine-readable instructions 204. Machine-readable instructions 204 may include one or more instruction modules. The instruction modules may include computer program modules. The instruction modules may include one or more of communication module 206, receiving module 208, tracking module 210, determining module 212, positioning module 214, displaying module 216, detecting module 218 and/or other instruction modules.

The communication module 206 may be configured to communicate with one or more devices. The system 200 may be implemented at a device worn by a user of the one or more devices. As such, the user may be an owner of the one or more devices performing operations according to modules of the system 200.

The receiving module 208 is configured to receive data from at least one or more sensors included in the devices. The sensors may include, for example, an EMG sensor, HMD sensors, haptic feedback sensors, motion sensors, IMU sensors such as accelerometers, gyroscopes, optical sensors, and the like.

The tracking module 210 may be configured to receive sensory data from the sensors and track user hand position, hand movement, or one or more joints in the hand. In some embodiments, the tracking module 210 tracks one or more thumbs of the user and thumb joints (i.e., thumb tip, thumb distal, thumb proximal). For example, the tracking module 210 may be configured to track thumb tip position relative to an index finger surface. In some implementation, the tracking module 210 is configured to track knuckle position and knuckle movements.

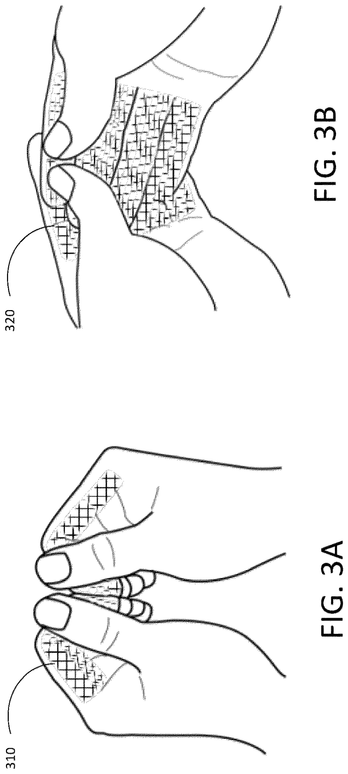

The determining module 212 may be configured to monitor the tracked information and identify the performance of a preset posture or gesture. That is, the determining module 212 determines, based on the sensory data tracked by the tracking module 210, when the user makes a unique activation gesture (i.e., the preset posture). In some implementations, the preset posture is a knuckle posture (with hands brought together) which mimics the posture of a user holding and typing on a smartphone/mobile device. In some implementations, at least one of the three joints in the finger must be brought together in order to perform the knuckle posture. The knuckle posture is also illustrated in FIG. 3A. As shown in FIG. 3A, the distal interphalangeal joints (DIP) of both hands are brought together so that the two hands are in contact (or almost in contact). In some implementations, the preset posture is an open palm posture with the flat of the user's hand facing an upward direction (which mimics the user holding a larger device, e.g., a keyboard, tablet, or the like). The open palm posture is also illustrated in FIG. 3B. In some implementations, the preset posture may be identified by a single hand gesture (e.g., the user lifting their hand within a general view similar to holding a smartphone in one hand in front of you) to invoke the virtual keyboard (i.e., a typing mode). The determining module 212 may be further configured to determine when the preset posture is released and stop the typing mode.

The positioning module 214 may be configured to determine an orientation and position of a virtual keyboard relative to the user's hand. The position of the virtual keyboard may be anchored to a thumb(s) of the user. Using hand tracking to position the virtual keyboard enables the system 200 to support mobile and freehand AR activities with haptic feedback through on-skin thumb typing. The orientation and position may include keyboard parameters such as, but not limited to, a layout, size, height of the virtual keyboard, distance between keys on the virtual keyboard, and the like. The keyboard parameters may be automatically adjusted based on the sensory data and personalized to the user (e.g., a size of the user's hand, distance from a VR device and the user's hand, distance from the user's hand relative to the floor, movement of the user's hand or a change in position, etc.). For example, a larger virtual keyboard may be configured to support confident thumb tapping without inducing too much movement of the entire hand to reach end keys such as q or p. The positioning module 214 may be configured to scale the keyboard parameters based on user preferences or manual adjustments made by the user. As another example, the positioning module 214 is configured to scale the keyboard size based on the user's hand size. The positioning module 214 may be further configured to determine a leveled keyboard surface (relative to the user's hand) at which to position the virtual keyboard and map the virtual keyboard to the determined surface. In some implementations, the surface 310 (i.e., leveled keyboard surface) is the index finger surface of the user as shown in FIG. 3A. In some implementations, the surface 320 (i.e., leveled keyboard surface) may be the nested finger surface as shown in FIG. 3B. As an example, the leveled keyboard surface may be aligned with the flat of the user's hand. Illustrations of FIGS. 3A-3B are exemplary and are not intended to limit the scope of the device described herein. For example, the virtual keyboard may be positioned for implementation on a single hand, based on the present posture being performed by one hand. In some implementations, the user may alternate between performing the present posture with one hand and two hands to invoke display on the virtual keyboard.

In some embodiments, the positioning module 214 may be triggered by a determination of the determining module 212 that the preset posture is performed.

In some implementations, the virtual keyboard is positioned to appear directly overlaid on the determined surface. The keyboard may be leveled with the user's hands such that when hitting a key with the thumb, the user's thumb makes contact with the surface of their own hand to provide passive tactile/haptic feedback to the user, rather than tapping in mid-air. The haptic feedback may also be monitored, using the one or more sensors, to improve key press detection (described later with reference to the detecting module 218).

In some implementations, the virtual keyboard is positioned within a predetermined distance from the determined surface, and thus the user selecting keys on the virtual keyboard will mimic a user pressing into a key of a traditional keyboard. That is, the users' thumb must pass through the virtual keyboard to contact the surface of the users' hand.

In some embodiments, the position of the virtual keyboard may be fixed to an initial determined position in space. That is, the virtual keyboard is stationary at the initial position once it is determined. According to some embodiments, users can manually align their index finger surface to a space-fixed keyboard plane so that they can hit the keyboard when the thumb touches the index finger surface (i.e., a moment of hitting the virtual keyboard coincides with the moment of hitting the index finger surface to provide the user with surface haptics). When the virtual keyboard is stationary, users can re-position the virtual keyboard by releasing the present posture and re-making the preset posture at a new position.

In some embodiments, the device includes a hand-lock feature wherein the position of the virtual keyboard is locked to the user's hand. In some implementations, the hand-lock may be automatically activated when the user is determined to be in motion (e.g., walking). As such, leveraging users' motor memory of typing on phones in mobile scenarios. In some embodiments, the device includes a position lock feature wherein the user can lock a placement of the virtual keyboard after the preset posture is performed and the virtual keyboard is displayed. In this manner, the user is able to set a position of the keyboard, remove themselves from the set position, and return to the set position to resume operations via the virtual keyboard.

The positioning module 214 may be configured to dynamically adjust the position of the virtual keyboard based on real-time changes in the sensory data or updates received from the tracking module 210. The position and orientation of the virtual keyboard may be updated based on the tracked positions of hand joints. As such, a position of the virtual keyboard may follow the user's hand movements so long as the preset posture/gesture is not released and automatically align with a determined surface (e.g., the index finger hand surface). In some embodiments, a filter (e.g., low-pass filter) is applied to stabilize the position of the virtual keyboard and limit the axis of rotation to stably align the keyboard plane with the determined surface. According to some embodiments, input receiving regions for keys are varied based on user data such as typing patterns and behaviors. For example, a user may have a tendency to overreach a selection of letters on the virtual keyboard via their right thumb and underreach selections with their left thumb and any other reasonable variation of such behaviors unique to individual users. Thus, the virtual keyboard and the virtual keys on the virtual keyboard are optimized in real time based on the user and enables a more personalized typing experience for the user overtime.

The display module 216 may be configured to display the virtual keyboard in accordance with the determined position on the determined surface. The virtual keyboard is displayed as long as the present position is maintained. The virtual keyboard may be displayed at a front view of the user as if they were to type on a smartphone or the like. In some embodiments, the virtual keyboard display includes a display of three thumb joints (i.e., thumb tip, thumb distal, thumb proximal), based on the tracked data from tracking module 210, and a projection arc linking the thumb joints with hovered key coloring. The thumb joints and the projection arc are configured to move in accordance with movements in the user's thumb. The display of the thumb joints and the projection arc may be a feature enabled/disabled by the user. In some implementations, the thumb joints and the projection arc occlude keys of the virtual keyboard. As such, the thumb joints and the projection arc appear to be overlayed on top of the virtual keyboard. In another implementation, the keys of the virtual keyboard are visible irrespective of thumb position (e.g., the tip of the thumb becomes slightly transparent and does not completely obscure the keys it may be hovering over; reducing the occlusion of the virtual keyboard). By visualizing all three thumb joints, users can better estimate thumb movement path during tapping, and the projection arc helps users perform stable target pointing. A length of the projection arc also provides users with a sense of distance from their thumb to the virtual keyboard and an expected key to be selected based on the movement path. When the preset posture is released (determined by determining module 212), the display module 216 may be configured to stop the virtual keyboard display and automatically transition to another task (e.g., a new task, a most recent task, a home screen, etc.).

In some embodiments, the virtual keyboard display includes a word completion feature and provides suggested words (e.g., top two-word suggestions) based on already selected letters/characters. The word completion feature may be trained using a machine learning (ML) model that adapts to a user based on at least user behavior, history, tendencies, and spatial probability and language model probability to find the most probable words based on a calculated final probability score. Spatial probability for each key may be calculated using, for example, a bivariate Gaussian Distribution. In some implementations, the final probability score of a word may be calculated as, for all the words in lexicon starting with a candidate character sequence provided from selected key samples, a frequency of the word multiplied with the spatial probability.

The detecting module 218 may be configured to perform key press detection based on at least the tracked data (i.e., from the tracking module 210) using data such as a distance between finger joints, movement of thumb joints, angle between thumb joints, etc. The detecting module 218 may be configured to determine which virtual keys are selected by a user on the virtual keyboard. The key press detection may be based on using movement models, language models, and user personalization's. Users may select keys by performing a tapping operation/action (i.e., tapping on the determined surface similar to typing on a standard keyboard), swiping operation/action (i.e., swipe typing across the virtual keyboard to enter one or more keys on the keyboard as a selection/input), or pressing (holding) a key on the virtual keyboard. The movement model may be trained on user movement and predict an expected key selection (customized to the user). The selection region configured to receive an input for a key may be adjusted based on the movement model. For example, the selection region for a letter may not be restricted to the area depicting the letter (i.e., the square region encompassing the letter) and may include at least a portion of the top-right portion of the key based on the user typically tapping on that area when attempting to select the letter.

The display module 216 may be further configured to display an output of the key press detection in a same focus area of the displayed virtual keyboard. The focus area may be a region correlative to the virtual keyboard (e.g., above the virtual keyboard). In some implementations, the output is displayed based on the users' gaze. As such, the output may follow the users' gaze and update in real time. In another implementation, the output is displayed above the hands, in a location based on a position of the device, etc. In some implementations, the display module 216 may be further configured to display each predicted letter and display an autocomplete (predicted) word based on the predicted letters. In some implementations, the display module 216 may be further configured to display a predicted word after all inputs for a word have been selected (i.e., word-level text entry).

In some implementations, the detecting module 218 detects whether a thumb touches the index finger surface (e.g., surface 310). Embodiments do not require handheld controllers or additional modalities of input. Users can perform the familiar one or two thumb typing on the surface of their hands (as done when using smartphones) and get haptic feedback from their skin surface (instead of, e.g., a 2D screen/surface). However, in some implementations, the system 200 may receive data from, for example, a thumb-worn capacitive sensing tape and perform key press detection based on the received data and the tracked data as described above. By non-limiting example, the system 200 may detect self-contact of the thumb to the body contact (i.e., body contact) using electrical impedance from a ring worn by the user. In some implementations, users make a key press with thumb tap after pointing their thumb close to the desired key on the virtual keyboard.

Embodiments as disclosed herein, allow efficient text input in AR/VR applications, with a word-per-minute (WPM) rate comparable to bimanual smartphone typing. Methods and systems of STAR also achieve a shorter learning curve and a socially acceptable manner of text input (i.e., it is comfortable to use in the presence of bystanders or non-AR persons).

In some implementations, computing platform(s) 202, remote platform(s) 220, and/or external resources 222 may be operatively linked via one or more electronic communication links. For example, such electronic communication links may be established, at least in part, via a network 230 such as the Internet and/or other networks. It will be appreciated that this is not intended to be limiting, and that the scope of this disclosure includes implementations in which computing platform(s) 202, remote platform(s) 220, and/or external resources 222 may be operatively linked via some other communication media.

A given remote platform 220 may include one or more processors configured to execute computer program modules. The computer program modules may be configured to enable an expert or user associated with the given remote platform 220 to interface with system 200 and/or external resources 222, and/or provide other functionality attributed herein to remote platform(s) 220. By way of non-limiting example, a given remote platform 220 and/or a given computing platform 202 may include one or more of a server, an artificial reality device and/or system, a desktop computer, a laptop computer, a handheld computer, a tablet computing platform, a NetBook, a Smartphone, a gaming console, smartwatch or band, and/or other computing platforms.

External resources 222 may include sources of information outside of system 200, external entities participating with system 200, and/or other resources. In some implementations, some or all of the functionality attributed herein to external resources 222 may be provided by resources included in system 200.

Computing platform(s) 202 may include electronic storage 224, one or more processors 226, and/or other components. Computing platform(s) 202 may include communication lines, or ports to enable the exchange of information with a network (e.g., network 150/230) and/or other computing platforms. Illustration of computing platform(s) 202 in FIG. 2 is not intended to be limiting. Computing platform(s) 202 may include a plurality of hardware, software, and/or firmware components operating together to provide the functionality attributed herein to computing platform(s) 202. For example, computing platform(s) 202 may be implemented by a cloud of computing platforms operating together as computing platform(s) 202.

Electronic storage 224 may comprise non-transitory storage media that electronically stores information. The electronic storage media of electronic storage 224 may include one or both of system storage that is provided integrally (i.e., substantially non-removable) with computing platform(s) 202 and/or removable storage that is removably connectable to computing platform(s) 202 via, for example, a port (e.g., a USB port, a firewire port, etc.) or a drive (e.g., a disk drive, etc.). Electronic storage 224 may include one or more of optically readable storage media (e.g., optical disks, etc.), magnetically readable storage media (e.g., magnetic tape, magnetic hard drive, floppy drive, etc.), electrical charge-based storage media (e.g., EEPROM, RAM, etc.), solid-state storage media (e.g., flash drive, etc.), and/or other electronically readable storage media. Electronic storage 224 may include one or more virtual storage resources (e.g., cloud storage, a virtual private network, and/or other virtual storage resources). Electronic storage 224 may store software algorithms, information determined by processor(s) 228, information received from computing platform(s) 202, information received from remote platform(s) 220, and/or other information that enables computing platform(s) 202 to function as described herein.

Processor(s) 228 may be configured to provide information processing capabilities in computing platform(s) 202. As such, processor(s) 228 may include one or more of a digital processor, an analog processor, a digital circuit designed to process information, an analog circuit designed to process information, a state machine, and/or other mechanisms for electronically processing information. Although processor(s) 228 is shown in FIG. 2 as a single entity, this is for illustrative purposes only. In some implementations, processor(s) 228 may include a plurality of processing units. These processing units may be physically located within the same device, or processor(s) 228 may represent processing functionality of a plurality of devices operating in coordination. Processor(s) 228 may be configured to execute modules 206, 208, 210, 212, 214, 216, 218, and/or other modules. Processor(s) 228 may be configured to execute modules 206, 208, 210, 212, 214, 216, 218, and/or other modules by software; hardware; firmware; some combination of software, hardware, and/or firmware; and/or other mechanisms for configuring processing capabilities on processor(s) 228. As used herein, the term "module" may refer to any component or set of components that perform the functionality attributed to the module. This may include one or more physical processors during execution of processor readable instructions, the processor readable instructions, circuitry, hardware, storage media, or any other components.

Although FIG. 2 shows example blocks of the system 200, in some implementations, the system 200 may include additional blocks, fewer blocks, different blocks, or differently arranged blocks than those depicted in FIG. 2. Additionally, or alternatively, two or more of the blocks of the system may be combined.

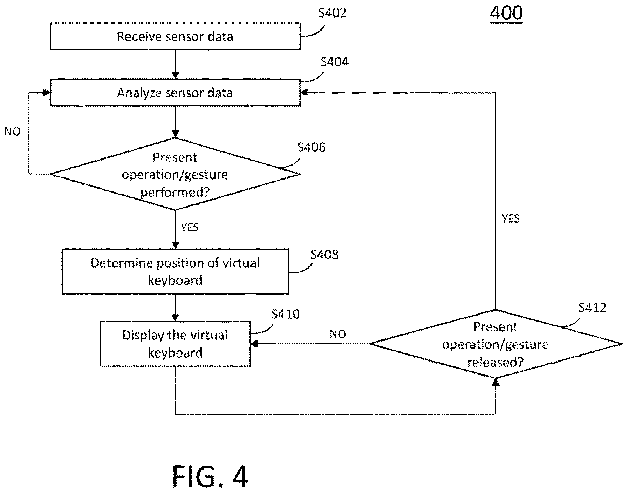

FIG. 4 illustrates a workflow of a process 400 for displaying a freehand virtual keyboard, according to some embodiments. In some embodiments, one or more of the steps in process 400 may be performed by one or more of the modules 206, 208, 210, 212, 214, 216, 218, and/or other modules.

As shown in FIG. 4, at S402, sensor data is received at a client device. The sensor data may be from one or more sensors included in the client device or communicably coupled to the client device.

At S404, the sensor data is analyzed for a preset operation or gesture. Specifically, the sensor data is analyzed for hand, finger, and joint movements and positions. At S406, the process 400 determines whether, based on the analysis, the present operation or gesture is being performed. If YES at S406, a position of the virtual keyboard is determined (S408). The position may include a surface at which the keyboard will overlay, an orientation of the keyboard (e.g., as a plane determined using the cartesian coordinate system), a size of the keyboard and the keys, etc. If NO at S406, the process returns to S404 and continues to analyze the data until the preset posture or gesture is identified (i.e., performed by the user).

At S410, the virtual keyboard is displayed at the position determined at S408. The display of the virtual keyboard may include other features such as an output display, word fill, word suggestion, thumb point markers, etc. According to some embodiments, the virtual keyboard is not displayed, and thus the user relies on motor-memory alone to perform handsfree typing.

At S412, if the preset operation or gesture is released or no longer being performed, the process returns to S404. If the preset operation is maintained (NO at S412), then the display of the virtual keyboard is continued. Embodiments are not limited to this order of steps. For example, if at any point in the process 400 the preset operation or gesture is no longer being performed, the virtual keyboard is no longer displayed (i.e., the display operation is terminated).

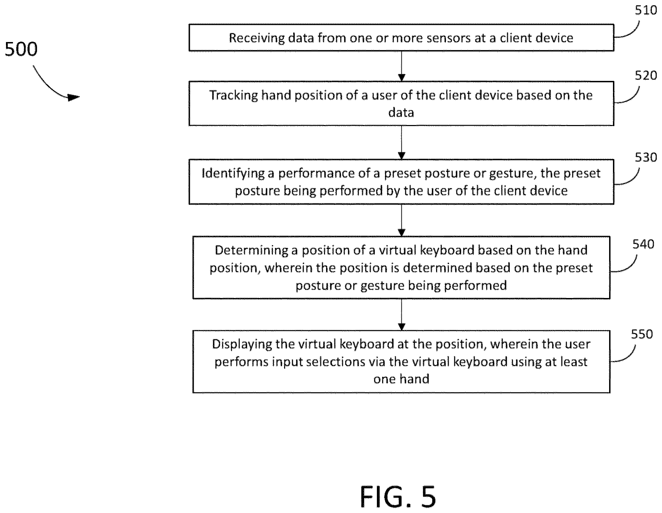

FIG. 5 illustrates a flowchart of a method 500 for freehand typing, according to some embodiments. The techniques described herein may be implemented as method(s) that are performed by physical computing device(s); as one or more non-transitory computer-readable storage media storing instructions which, when executed by computing device(s), cause performance of the method(s); or as physical computing device(s) that are specially configured with a combination of hardware and software that causes performance of the method(s).

In some implementations, one or more operation blocks of FIG. 5 may be performed by a processor circuit executing instructions stored in a memory circuit, in a client device, a remote server or a database, communicatively coupled through a network (e.g., processors, memories, client device 110, server 130, databases, and network 150). In some implementations, one or more of the operations in method 500 may be performed by one or more of the modules 206, 208, 210, 212, 214, 216, and 218. In some embodiments, methods consistent with the present disclosure may include at least one or more operations as in method 500 performed in a different order, simultaneously, quasi-simultaneously or overlapping in time.

In operation 510, the method 500 includes receiving data from one or more sensors at a client device. The client device may be one of a plurality of devices in an AR/VR application or system.

In operation 520, the method 500 includes tracking hand position of a user of the client device based on the data. The tracking of the hand position may include tracking hand movement and hand joints, specifically, thumb movement and thumb joints.

In operation 530, the method 500 includes identifying a performance of a preset posture or gesture, the preset posture being performed by the user of the client device. In some embodiments, the preset posture or gesture is a knuckle posture performed by one or two hands wherein an outer surface of an index finger and one or both thumbs face an upward direction. When the knuckle posture is performed by two hands, at least one joint of a same finger in each hand is brought together.

In operation 540, the method 500 includes determining a position of a virtual keyboard based on the hand position, wherein the position is determined based on the preset posture or gesture being performed. The position of the virtual keyboard may be defined according to a set of parameters. The set of parameters may include, but are not limited to, a layout, size, height, distance between keys of the virtual keyboard, and orientation. The set of parameters may be adjusted based on at least the data associated with the user and alter the position of the virtual keyboard. In some embodiments, the user may manually adjust one or more of the set of parameters based on user preference.

In operation 550, the method 500 includes displaying the virtual keyboard at the position. The virtual keyboard may be displayed in a general view of the user, leveled with the hand position and displayed to appear within a predetermined distance from a hand of the user. The method 500 may further include terminating the displaying of the virtual keyboard in response to the preset operation or gesture being released. According to some embodiments, the virtual keyboard is not always displayed, and thus the user may rely on motor-memory to perform handsfree typing.

The method 500 may further include displaying a visualization of three thumb joints that correspond to hand movements of the user. The method 500 may further include displaying a projection arc linking at least one of the three thumb joint visualizations. At least one of the three thumb joints and/or the projection arc may be displayed to hover over the virtual keyboard.

The virtual keyboard may be configured to receive input selections (e.g., of keys) on the virtual keyboard using at least one hand. The method 500 may further include determining the input selections of virtual keys on the virtual keyboard based on the tracking of the hand position and the position of the virtual keyboard. The input selections may be performed via at least one of virtual key selections in a typing operation and virtual key selections in a swiping operation.

The method 500 may further include determining a leveled keyboard surface and mapping the virtual keyboard to the leveled keyboard surface. The virtual keyboard is then displayed at the leveled keyboard surface. The leveled keyboard surface may be a peripheral index finger surface of the user. In another implementation, the leveled keyboard surface corresponds to a nested finger surface of the user. As such, the position of the virtual keyboard (as described in operation 540) is determined such that the input selections via the virtual keyboard enable haptic feedback from touching the user's own hand when making input selections.

Although FIG. 5 shows example blocks of the method 500, in some implementations, the method 500 may include additional blocks, fewer blocks, different blocks, or differently arranged blocks than those depicted in FIG. 5. Additionally, or alternatively, two or more of the blocks of the method may be performed in parallel.

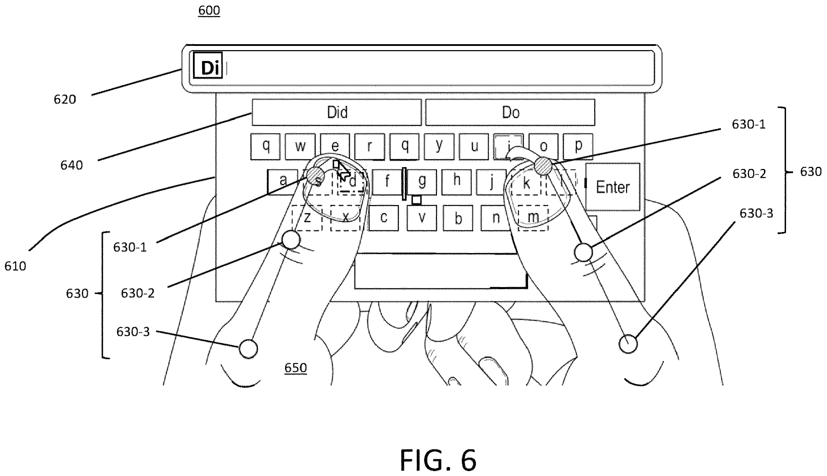

FIG. 6 is an example illustration of a virtual keyboard display 600 in an AR/VR system, according to one or more embodiments. The virtual keyboard display 600 may include virtual keyboard 610, an output 620, and joint markers 630. The joint markers 630 may generally refer to three thumb joints (630-1/630-2/630-3).

As shown in FIG. 6, the virtual keyboard 610 is displayed on the index finger surface of a user (e.g., as illustrated in FIG. 3A). The user makes input selections via the virtual keyboard 610. In the example of FIG. 6, the user has selected keys corresponding to letter "d" followed by "i" which is displayed in the output 620. The output 620 is displayed at the top of the virtual keyboard 610. The virtual keyboard 610 also includes word suggestions 640 based on the selected keys. The display 600 may be displayed to the user by tracking a position and movement of the hand 650 and thumb joints (i.e., joint markers 630). Key selections may be based on haptic feedback and tracking of the thumb pointer 630-1.

Embodiments are not limited by the illustrations of FIG. 6 and may be implemented according to one or more embodiments described herein. The virtual keyboard display 600 may be on one hand. The virtual keyboard display 600 may be positioned on another surface (e.g., different from the index finger surface of the hand).

### Hardware Overview

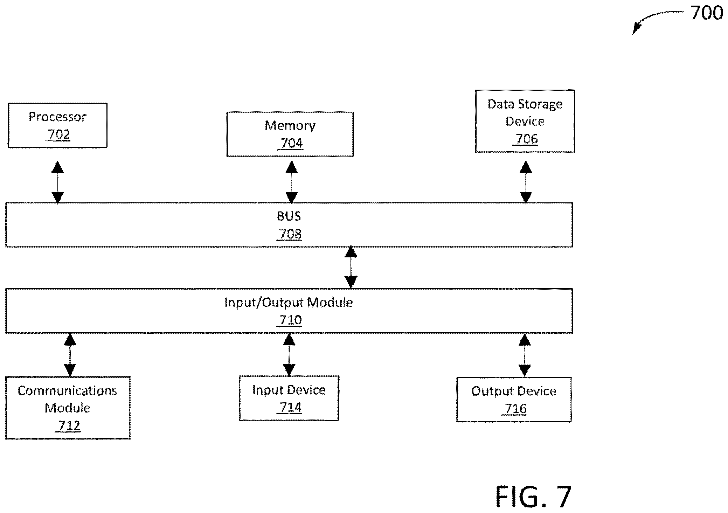

FIG. 7 is a block diagram illustrating an exemplary computer system 700 with which the computing platform, client device, and server of FIGS. 1 and 2, and method(s) described herein can be implemented. The computer system 700 may be implemented using hardware or a combination of software and hardware, either in a dedicated server, or integrated into another entity, or distributed across multiple entities. Computer system 700 may include a desktop computer, a laptop computer, a tablet, a phablet, a smartphone, a feature phone, a server computer, smartwatch, AR/VR device, or otherwise. A server computer may be located remotely in a data center or be stored locally.

Computer system 700 *(e.g.,* client 110 and server 130) includes a bus 708 or other communication mechanism for communicating information, and a processor 702 (e.g., processors of client device 110, processor(s) 228) coupled with bus 708 for processing information. By way of example, the computer system 700 may be implemented with one or more processors 702. Processor 702 may be a general-purpose microprocessor, a microcontroller, a Digital Signal Processor (DSP), an Application Specific Integrated Circuit (ASIC), a Field Programmable Gate Array (FPGA), a Programmable Logic Device (PLD), a controller, a state machine, gated logic, discrete hardware components, or any other suitable entity that can perform calculations or other manipulations of information.

Computer system 700 can include, in addition to hardware, code that creates an execution environment for the computer program in question, e.g., code that constitutes processor firmware, a protocol stack, a database management system, an operating system, or a combination of one or more of them stored in an included memory 704, such as a Random Access Memory (RAM), a Flash Memory, a Read-Only Memory (ROM), a Programmable Read-Only Memory (PROM), an Erasable PROM (EPROM), registers, a hard disk, a removable disk, a CD-ROM, a DVD, or any other suitable storage device, coupled to bus 708 for storing information and instructions to be executed by processor 702. The processor 702 and the memory 704 can be supplemented by, or incorporated in, special purpose logic circuitry.

The instructions may be stored in the memory 704 and implemented in one or more computer program products, *e.g*., one or more modules of computer program instructions encoded on a computer-readable medium for execution by, or to control the operation of, the computer system 700, and according to any method well-known to those of skill in the art, including, but not limited to, computer languages such as data-oriented languages (*e.g.,* SQL, dBase), system languages (*e.g.,* C, Objective-C, C++, Assembly), architectural languages (e.g., Java, .NET), and application languages (*e.g.,* PHP, Ruby, Perl, Python). Instructions may also be implemented in computer languages such as array languages, aspect-oriented languages, assembly languages, authoring languages, command line interface languages, compiled languages, concurrent languages, curly-bracket languages, dataflow languages, data-structured languages, declarative languages, esoteric languages, extension languages, fourth-generation languages, functional languages, interactive mode languages, interpreted languages, iterative languages, list-based languages, little languages, logic-based languages, machine languages, macro languages, metaprogramming languages, multiparadigm languages, numerical analysis, non-English-based languages, object-oriented class-based languages, object-oriented prototype-based languages, off-side rule languages, procedural languages, reflective languages, rule-based languages, scripting languages, stack-based languages, synchronous languages, syntax handling languages, visual languages, wirth languages, and xml-based languages. Memory 704 may also be used for storing temporary variable or other intermediate information during execution of instructions to be executed by processor 702.

A computer program as discussed herein does not necessarily correspond to a file in a file system. A program can be stored in a portion of a file that holds other programs or data (*e.g.,* one or more scripts stored in a markup language document), in a single file dedicated to the program in question, or in multiple coordinated files (*e.g.,* files that store one or more modules, subprograms, or portions of code). A computer program can be deployed to be executed on one computer or on multiple computers that are located at one site or distributed across multiple sites and interconnected by a communication network. The processes and logic flows described in this specification can be performed by one or more programmable processors executing one or more computer programs to perform functions by operating on input data and generating output.

Computer system 700 further includes a data storage device 706 such as a magnetic disk or optical disk, coupled to bus 708 for storing information and instructions. Computer system 700 may be coupled via input/output module 710 to various devices. Input/output module 710 can be any input/output module. Exemplary input/output modules 710 include data ports such as USB ports. The input/output module 710 is configured to connect to a communications module 712. Exemplary communications modules 712 include networking interface cards, such as Ethernet cards and modems. In certain embodiments, input/output module 710 is configured to connect to a plurality of devices, such as an input device 714 and/or an output device 716 (e.g., client device 110 and computing platform 202). Exemplary input devices 714 include a keyboard and a pointing device, *e.g.,* a mouse or a trackball, by which a user can provide input to the computer system 700. Other kinds of input devices 714 can be used to provide for interaction with a user as well, such as a tactile input device, visual input device, audio input device, or brain-computer interface device. For example, feedback provided to the user can be any form of sensory feedback, *e.g*., visual feedback, auditory feedback, or tactile feedback; and input from the user can be received in any form, including acoustic, speech, tactile, or brain wave input. Exemplary output devices 716 include display devices, such as an LCD (liquid crystal display) monitor, for displaying information to the user.

According to one embodiment, the client device 110 and server 130 can be implemented using a computer system 700 in response to processor 702 executing one or more sequences of one or more instructions contained in memory 704. Such instructions may be read into memory 704 from another machine-readable medium, such as data storage device 706. Execution of the sequences of instructions contained in main memory 704 causes processor 702 to perform the process steps described herein. One or more processors in a multi-processing arrangement may also be employed to execute the sequences of instructions contained in memory 704. In alternative embodiments, hardwired circuitry may be used in place of or in combination with software instructions to implement various embodiments of the present disclosure. Thus, embodiments of the present disclosure are not limited to any specific combination of hardware circuitry and software.

Various embodiments of the subject matter described in this specification can be implemented in a computing system that includes a back-end component, *e.g*., a data server, or that includes a middleware component, *e.g*., an application server, or that includes a front-end component, *e.g.,* a client computer having a graphical user interface or a Web browser through which a user can interact with an implementation of the subject matter described in this specification, or any combination of one or more such back-end, middleware, or front-end components. The components of the system can be interconnected by any form or medium of digital data communication, *e.g*., a communication network. The communication network (*e.g*., network 150) can include, for example, any one or more of a LAN, a WAN, the Internet, and the like. Further, the communication network can include, but is not limited to, for example, any one or more of the following tool topologies, including a bus network, a star network, a ring network, a mesh network, a star-bus network, tree or hierarchical network, or the like. The communications modules can be, for example, modems or Ethernet cards.

Computer system 700 can include clients and servers. A client and server are generally remote from each other and typically interact through a communication network. The relationship of client and server arises by virtue of computer programs running on the respective computers and having a client-server relationship to each other. Computer system 700 can be, for example, and without limitation, a desktop computer, laptop computer, or tablet computer. Computer system 700 can also be embedded in another device, for example, and without limitation, a mobile telephone, a PDA, a mobile audio player, a Global Positioning System (GPS) receiver, a video game console, and/or a television set top box.

The term "machine-readable storage medium" or "computer-readable medium" as used herein refers to any medium or media that participates in providing instructions to processor 702 for execution. Such a medium may take many forms, including, but not limited to, non-volatile media, volatile media, and transmission media. Non-volatile media include, for example, optical or magnetic disks, such as data storage device 706. Volatile media include dynamic memory, such as memory 704. Transmission media include coaxial cables, copper wire, and fiber optics, including the wires forming bus 708. Common forms of machine-readable media include, for example, floppy disk, a flexible disk, hard disk, magnetic tape, any other magnetic medium, a CD-ROM, DVD, any other optical medium, punch cards, paper tape, any other physical medium with patterns of holes, a RAM, a PROM, an EPROM, a FLASH EPROM, any other memory chip or cartridge, or any other medium from which a computer can read. The machine-readable storage medium can be a machine-readable storage device, a machine-readable storage substrate, a memory device, a composition of matter affecting a machine-readable propagated signal, or a combination of one or more of them.

To illustrate the interchangeability of hardware and software, items such as the various illustrative blocks, modules, components, methods, operations, instructions, and algorithms have been described generally in terms of their functionality. Whether such functionality is implemented as hardware, software, or a combination of hardware and software depends upon the particular application and design constraints imposed on the overall system. Skilled artisans may implement the described functionality in varying ways for each particular application.

As used herein, the phrase "at least one of" preceding a series of items, with the terms "and" or "or" to separate any of the items, modifies the list as a whole, rather than each member of the list (*i.e.,* each item). The phrase "at least one of" does not require selection of at least one item; rather, the phrase allows a meaning that includes at least one of any one of the items, and/or at least one of any combination of the items, and/or at least one of each of the items. By way of example, the phrases "at least one of A, B, and C" or "at least one of A, B, or C" each refer to only A, only B, or only C; any combination of A, B, and C; and/or at least one of each of A, B, and C.

To the extent that the term "include," "have," or the like is used in the description or the claims, such term is intended to be inclusive in a manner similar to the term "comprise" as "comprise" is interpreted when employed as a transitional word in a claim. The word "exemplary" is used herein to mean "serving as an example, instance, or illustration." Any embodiment described herein as "exemplary" is not necessarily to be construed as preferred or advantageous over other embodiments.

A reference to an element in the singular is not intended to mean "one and only one" unless specifically stated, but rather "one or more." Moreover, nothing disclosed herein is intended to be dedicated to the public regardless of whether such disclosure is explicitly recited in the above description.

While this specification contains many specifics, these should not be construed as limitations on the scope of what may be claimed, but rather as descriptions of particular implementations of the subject matter. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

The subject matter of this specification has been described in terms of particular embodiments, but other embodiments can be implemented and are within the scope of the following claims. For example, while operations are depicted in the drawings in a particular order, this should not be understood as requiring that such operations be performed in the particular order shown or in sequential order, or that all illustrated operations be performed, to achieve desirable results. The actions recited in the claims can be performed in a different order and still achieve desirable results. As one example, the processes depicted in the accompanying figures do not necessarily require the particular order shown, or sequential order, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products. Other variations are within the scope of the following claims.

## Claims

1. A computer-implemented method, performed by at least one processor, for freehand typing, the method comprising:
receiving data from one or more sensors at a client device;
tracking hand position of a user of the client device based on the data;
identifying a performance of a preset posture, the preset posture being performed by the user of the client device;
determining a position of a virtual keyboard based on the hand position, wherein the position is determined based on the preset posture being performed; and
displaying the virtual keyboard at the position,
wherein the virtual keyboard is displayed in a general view of the user, the user performs input selections via the virtual keyboard using at least one hand, and the displaying of the virtual keyboard is terminated in response to the preset operation being released.

2. The computer-implemented method of claim 1, wherein the tracking hand position further comprises tracking hand movement and thumb joints.

3. The computer-implemented method of claim 1 or claim 2, wherein the preset posture is at least one of:
a knuckle posture performed by one or two hands with an outer surface of an index finger and one or two thumbs facing an upward direction, and when the knuckle posture is performed by two hands, at least one joint of a same finger in each hand is brought together, and
an open palm posture performed by one or two hands with a flat of the one or two hands and one or two thumbs facing an upward direction.

4. The computer-implemented method of any preceding claim, wherein the position of the virtual keyboard is defined by a set of parameters, the set of parameters including layout, size, height, distance between keys of the virtual keyboard, and orientation, and the set of parameters are adjusted based on at least the data associated with the user.

5. The computer-implemented method of any preceding claim, further comprising:
determining a leveled keyboard surface;
mapping the virtual keyboard to the leveled keyboard surface; and
displaying the virtual keyboard at the leveled keyboard surface,
wherein the leveled keyboard surface is one of a peripheral index finger surface of the user or a nested finger surface of the user.

6. The computer-implemented method of any preceding claim, wherein the virtual keyboard is leveled with the hand position and displayed to appear within a predetermined distance from a hand of the user.

7. The computer-implemented method of any preceding claim, further comprising:
determining the input selections of virtual keys on the virtual keyboard based on the tracking of the hand position and the position of the virtual keyboard, wherein the input selections are performed via at least one of virtual key selections in a typing operation and virtual key selections in a swiping operation,
and/or
wherein the position of the virtual keyboard is determined such that the input selections via the virtual keyboard enable haptic feedback.

8. The computer-implemented method of any preceding claim, further comprising:
displaying a visualization of three thumb joints that correspond to hand movements of the user; and
displaying a projection arc linking at least one of the three thumb joints,
wherein the at least one of the three thumb joints and the projection arc hover over the virtual keyboard.

9. The computer-implemented method of any preceding claim, further comprising:
determining that the user is in motion; and
locking the virtual keyboard at the position in response to a determination that the user is in motion.

10. A system for freehand typing, the system comprising:
one or more processors; and
a memory storing instructions which, when executed by the one or more processors, cause the system to:
receive data from one or more sensors at a client device;
track hand position of a user of the client device based on the data;
identify a performance of a preset posture, the preset posture being performed using at least one hand of the user of the client device;
determine a position of a virtual keyboard based on the hand position, wherein the position is determined based on the preset posture being performed; and
display the virtual keyboard at the position within a general view of the user,
wherein the user performs input selections via the virtual keyboard using at the least one hand, the display of the virtual keyboard is terminated in response to the preset operation being released, and the position of the virtual keyboard is determined such that the input selections via the virtual keyboard enable haptic feedback.

11. The system of claim 10, wherein:
the one or more processors further execute instructions to track hand movement and thumb joints, and/or
the preset posture is at least one of:
a knuckle posture performed by one or two hands with an outer surface of an index finger and one or two thumbs facing an upward direction, and when the knuckle posture is performed by two hands, at least one joint of a same finger in each hand is brought together, and
an open palm posture performed by one or two hands with a flat of the one or two hands and one or two thumbs facing an upward direction.

12. The system of claim 10 or claim 11, wherein:
the position of the virtual keyboard is defined by a set of parameters, the set of parameters including layout, size, height, distance between keys of the virtual keyboard, and orientation, and the set of parameters are adjusted based on at least the data associated with the user, and/or
wherein the one or more processors further execute instructions to:
determine a leveled keyboard surface;
map the virtual keyboard to the leveled keyboard surface; and
display the virtual keyboard at the leveled keyboard surface,
wherein the leveled keyboard surface is one of a peripheral index finger surface of the user or a nested finger surface of the user.

13. The system of any of claims 10 to 12, wherein:
the virtual keyboard is leveled with the hand position and displayed to appear within a predetermined distance from a hand of the user, and/or
wherein the one or more processors further execute instruction:
determine the input selections of virtual keys on the virtual keyboard based on the hand position and the position of the virtual keyboard, wherein the input selections are performed via at least one of virtual key selections in a typing operation and virtual key selections in a swiping operation.

14. The system of any of claims 10 to 13, wherein the one or more processors further execute instruction:
display a visualization of three thumb joints that correspond to hand movements of the user; and
display a projection arc linking at least one of the three thumb joints,
wherein the at least one of the three thumb joints and the projection arc hover over the virtual keyboard,
and/or
wherein the one or more processors further execute instruction:
determine that the user is in motion; and
lock the virtual keyboard at the position in response to a determination that the user is in motion.

15. A non-transient computer-readable storage medium having instructions embodied thereon, the instructions being executable by one or more processors to perform a method for freehand typing and cause the one or more processors to:
receive sensory data from one or more sensors at a client device, the client device being at least part of an AR application and worn by a user;
analyze the sensory data based at least in part on thumb position, joint position, joint movement, and hand movement, and hand position tracking of the user;
determine when the user performs a preset posture or gesture using at least one hand;
determine a position of a virtual keyboard based on the analysis; and
display the virtual keyboard at the position,
wherein the display is maintained while the present posture is maintained, and the position of the virtual keyboard is determined such that the input selections via the virtual keyboard enable haptic feedback.
